# EUROPEAN PATENT SPECIFICATION

(11) **EP 1 231 169 B1**
(45) Date of publication and mention of the grant of the patent: **29.09.2004**
(21) Application number: 01127930.4
(22) Date of filing: 23.11.2001
(51) Int. Cl.: B65G 57/18, B65G 57/26

(54) **Stacking of elongate Items**
Stapeln von länglichen Gegenständen
Empilement d'objets allongés

(30) Priority: 08.12.2000 DK 200001846
(43) Date of publication of application: 14.08.2002
(73) Proprietor: Brodbaek & Co. A/S, DK-7173 Vonge (DK)
(72) Inventor: Dam, Leif Sorensen, DK-7160 Torring (DK)
(74) Representative: Nielsen, Leif L.

(56) References cited:
- CH-A- 587 172
- DE-A- 2 703 238
- FR-A- 2 083 316
- US-A- 5 964 570

## Description

The present invention concerns an apparatus for stacking elongate items, comprising a conveyor for receiving and conveying items oriented with their lengths transversely of their direction of movement, the items being supplied randomly, and with a row of first stops for the items which are brought into contact with the first stops for forming a layer of adjacent items, and forks for supporting and transporting the layer of items in over a stack where the layer is to be placed, and a row of second stops which are in contact with the layer of items above the stack when retracting the forks so that the layer is laid off upon previous layers in the stack.

The invention furthermore concerns a method for stacking elongate items, comprising receiving and conveying items that are supplied in a random way with their lengths oriented transversely of their direction of movement, where the items are brought into contact with first stops for forming a layer of adjacent items, where the items are stacked in layers, as a layer formed on supporting forks are brought into contact with a row of second stops above the stack at the retracting of the forks, so that the layer is laid off upon previous layers in the stack.

More specifically, the invention concerns elongate items which may comprise single or plural overlaid objects, as for example one or more boards.

The invention is thus particularly directed to an apparatus and a method for use in stacking boards.

Such layer stackers are known where the items come from a conveyor which displaces the items in their longitudinal direction, after which they are transferred to a conveyor for subsequent perpendicular advancing, i.e. with a direction of movement oriented transversely of their length.

When the items come in upon the conveyor, they are advanced against a stop so that the items are brought into contact side by side for forming a layer with a desired width. When a sufficient number of items are placed on the conveyor, the rearmost items on the conveyor will be lifted off the conveyor. This occurs by plates, which are disposed between the chains of the conveyor and at a distance from the first stops, are lifted to a position above the chains of the conveyor. Hereby, a number of items will be situated between the first stops and the items lifted off. This number of items corresponds to the width of the stack that may be formed.

These items are then lifted up from the conveyor as the forks are lifted up from an interspace between the conveyor chains and lifting the items free of the chains, after which the forks are displaced out to a position over the stack which is situated at the end of the conveyor. When the formed layer resting on the forks is place above the stack, stops are displaced in behind the rearmost item in the layer. Preferably, a stop is pivoted from a position below the forks to a position above the forks. Then the forks are retracted so that the layer is laid off upon a previously formed layer in a stack.

In order to reduce the falling height as much as possible, the forks are made tapered and with very limited thickness. When the forks are retracted to a position between the chains of the conveyor, the forks are lowered again to a position under the surface of the chains. Then the first stops are actuated again so that they are displaced to a position above the chains of the conveyor. Then the items lifted free are lowered and brought to contact with against the first stops due to friction with the chain of the conveyor. Then the above cycle is repeated.

When stops are used, these will be disposed in a row in the longitudinal direction of the items. Usually two stops disposed in row are used as there is used a stop at each end of the longitudinal items. However, a larger number, e.g. up to 5, may also be used.

With the known apparatuses and methods, a relatively complicated cycle is followed, reducing the efficiency of the apparatus. Furthermore, the prior art apparatuses are disadvantageous in that they can only handle elongate items which may be disposed with their longitudinal sides in mutual contact without problems by forming a layer. Furthermore, the width of the formed layer is dependent on the distance provided between the row of the first stops and the plates which are lifting the items free of the conveyor.

It has been desired to make an apparatus where these drawbacks are relieved and which may handle items with uneven side edges. Particularly in the wood industry, there has been a need for handling of cut-up boards having uneven side edges. Thus there has been a need for performing an automatic handling and stacking of such boards.

Furthermore, there has been a wish of avoiding the drawbacks with lifting free the last section of board brought onto the conveyor, as a handling problem is experienced in automatic machines. Thus, the last item in the row of lifted items can rock about the side edge on the plates used for the lifting. Hereby there is the risk that it falls down on the formed layer resting on the conveyor. The subsequent automatic handling is hereby disturbed.

It is the purpose of the present invention to indicate an apparatus and a method relieving the above drawbacks, and which fulfils the desire for better equipment which enables handling and stacking of layers of elongate items, irrespectively whether these have straight or uneven side edges. Furthermore, it is the purpose to use an apparatus where each item may consist of one or more superposed items so that there is formed a layer each containing a number of superposed items.

This is achieved with an apparatus of the kind mentioned in the introduction, which is peculiar in that the conveyor is provided with several rows of first stops along its length which are arranged for being pivoted by rows between an active position, where they are retaining an item, and an inactive position, where the item is released so that a foremost item in the row of items on the conveyor is transferred individually to an interspace between successive rows of second stops which are disposed so as to be displaced in the direction of movement of the items above the forks, so that the items are transferred from the conveyor to the forks by the displacement of the second stops for forming of a layer where each item is disposed in each their interspace.

The method according to the invention is peculiar in that the items during the conveying may be retained individually as a conveyor has plural rows of first stops along its length which are arranged capable of being pivoted by rows between an active position where they are retaining an item, and an inactive position where the item is released so that a foremost item in the row of items on the conveyor is individually transferred to an interspace between successive rows of the second stops which are placed displaceable in the direction of movement of the items over the forks, so that the items are transferred from the conveyor to the forks by the displacement of the second stops for forming a layer where each item is placed in each their interspace.

As the conveyor has several rows of first stops, it is possible to retain the elongate items individually. The items will rest against stops which are provided at each end of the item. Preferably, stops may be displaced along their supporting shaft in the longitudinal direction of the items so that different item lengths may be handled in a way where the stops are provided approximately at each end of the item.

As each row of first stops may be activated individually, the first item in the row may be released independently of the releasing of the succeeding items. The first item is hereby released and is then caught in the interspace between the second stops. By the displacement of the second stops, which are preferably provided as carrier pins on endless chains or belts, the item is displaced out upon the supporting forks. Supporting forks will preferably be provided in continuation of the conveyor in a position over the stack under formation of a layer.

By this construction, the layer is not formed by arraying on the conveyor itself. Instead, the layer is formed by items being displaced one by one from the conveyor onto the forks where the layer is formed. The layer is preferably formed in a position approximately located over the already formed stack. When the layer is to be laid upon an already formed layer, the forks thus only need to perform a withdrawal from their position above the stack to a position between the chains of the conveyor. The formed layer is hereby placed in a way known per se upon the already formed layer in the stack.

It is possible to supplement the layer formation by placing a joist upon the laid layer. Such a joist may be placed between each layer, or be placed when a desired number of layers are formed in the stack. Such a joist is placed over the formed layer by using a joist layer known per se, which is working synchronously with the movement of the forks.

It is possible to form a layer by synchronising the movement of the first stops with the movement of the second stops above the stack. At least the first row of stops will thus be controlled synchronously with a stepwise advancing of the second stops above the stack.

As the conveyor is formed by a number of juxtaposed chains, the first stops will be disposed between the chains and arranged pivotably on shafts mounted under the chains. In this way, the stops may be pivoted from a position below the chains, where the items are advanced freely in frictional engagement with the chains, to a position above the chains, where the items are retained while they are resting on the chains of the conveyor. By having a number of stops disposed successively along the length of the conveyor, there is no risk that an item is lifted up and may tip down over an adjacent item and disturb a subsequent automatic handling.

If an item is placed above a first stop, when this is pivoted to its position over the chains, it will either be tipped forward or backwards as seen in the direction of movement. However, the item will not be able to tip down over an adjacent item if only it is ensured that the rows of first stops are provided with sufficient mutual spacing.

As mentioned above, irrespectively whether speaking of the first or the second stops, the stops may be provided displacing on the shafts on which they are mounted for being adjusted to different lengths on the items. When the second stops are provided as carrier pins mounted on chains running around sprocket wheels, it will be the sprocket wheels which are mounted displacing on the shafts. Such carrier pins will have such length and be placed in a position over the forks so that the outer ends of the pins are situated at a position under the level of the upper side of the forks. Hereby is achieved a secure engagement with items placed in interspaces between pins irrespectively whether the items are very thin.

The first stops may be actuated individually as they are connected with individual actuating units. Preferably, hydraulic cylinders are connected with shafts or bracket plates on the shafts for pivoting the first stops mounted thereon from a position above the conveyor to a position under the conveyor. As alternative to hydraulic cylinders, cams or electric or pneumatic actuators may be used. Also, it is possible to provide stops where the movement is established as a translation instead of a pivoting.

The invention will be explained more closely hereinafter with reference to the accompanying drawing, where:
- Fig. 1: shows a side view of an embodiment of an apparatus according to the invention,
- Fig. 2: shows a schematic view of the apparatus on Fig. 1 as seen from above with some parts omitted,
- Fig. 3: shows a side view of a supporting frame for the second stops,
- Fig. 4: shows a section through the supporting frame in Fig. 2, and
- Fig. 5: shows a partial view of the second stops.

The illustrated apparatus is particularly developed with the purpose of handling boards in a sawmill where the boards are cut up in a band saw and therefore appear with irregular side edges corresponding to the irregularities in the surface of the tree trunk from which the cutting is made.

The apparatus comprises a frame 1 supporting a conveyor 2 on which elongate items 3 are conveyed in direction 4, which is oriented transversely to their length for forming a layer 5 on supporting forks 6, which subsequently may be placed in a stack 7 (it is noted that the stack 7 is illustrated at a considerably lower position than it will be situated in normally when a layer is placed in the stack).

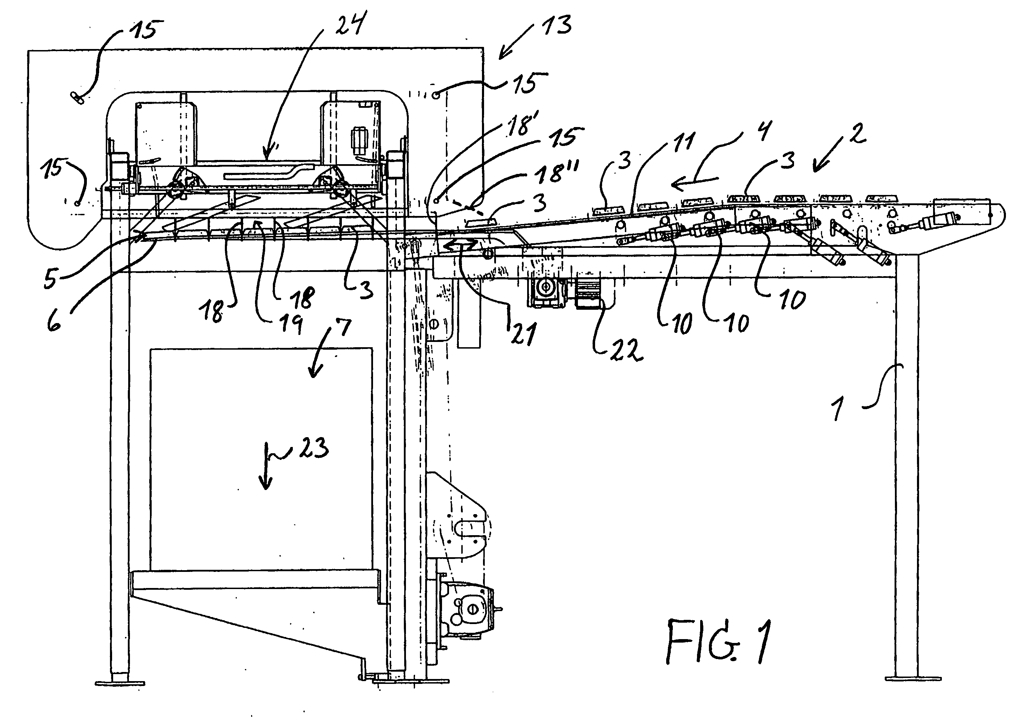

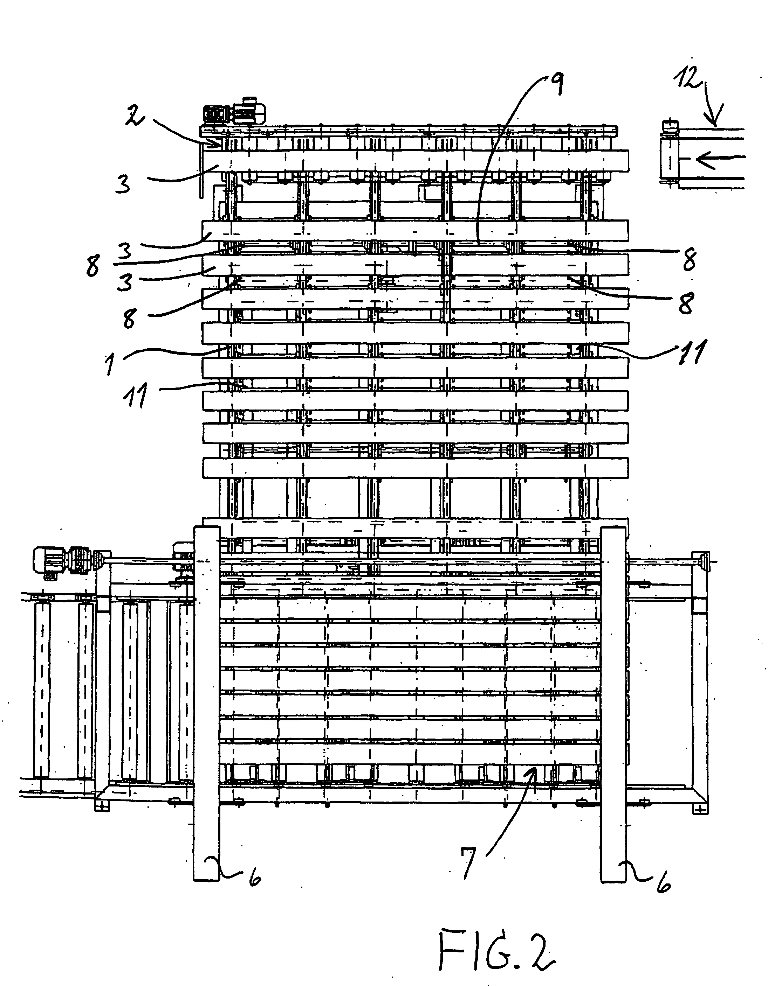

Particularly appearing from Figs. 1 and 2, the apparatus has several rows of first stops 8. These are placed on shafts 9 for pivoting by means of individual, actuated pneumatic cylinders 10. Hereby, the items 3 may be retained individually at the upper side of the conveyor 2 while they are resting on the conveyor chains 11. The stops 8 are provided in positions between the chains 11. The items 3 will be inserted into the conveyor 2 from a feeding conveyor 12 where the items are moved in their longitudinal direction. They are transferred from the feeding conveyor 12 to the conveyor 2 by suitable means, e.g. cam guides, as the items are automatically laid off on the conveyor 2.

The forks 6 are normally situated at a position above the stack as shown in Figs. 1 and 2, when a layer 5 is formed.

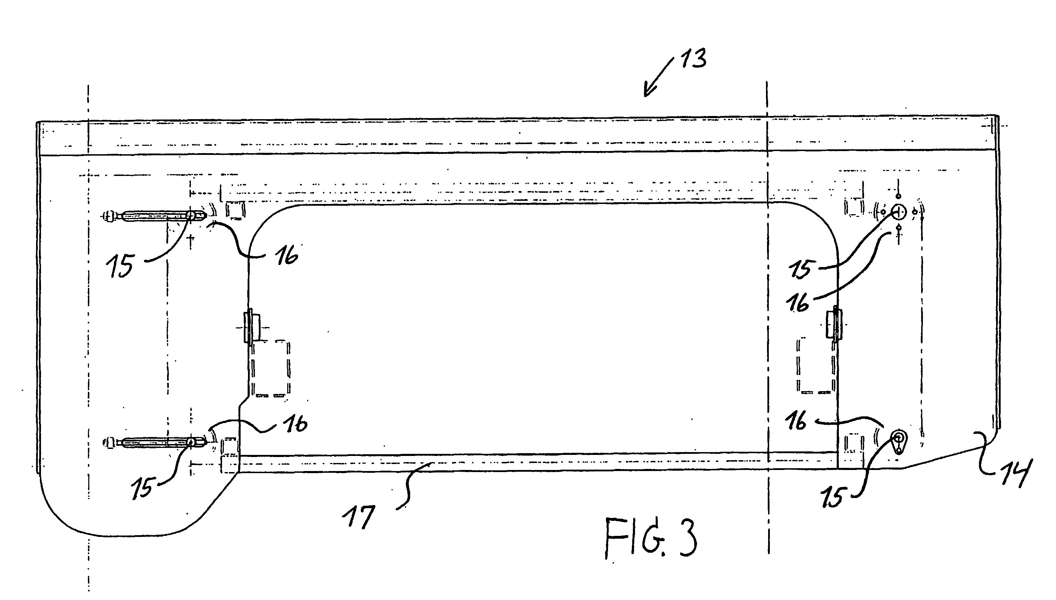

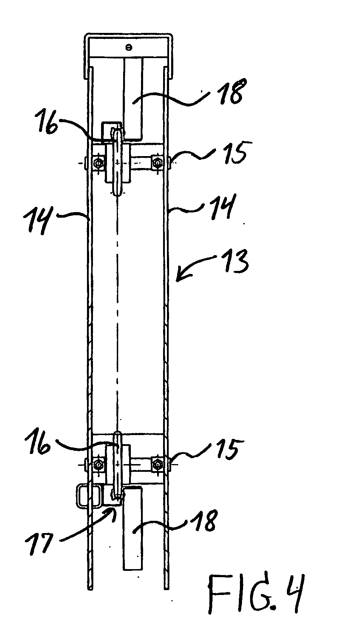

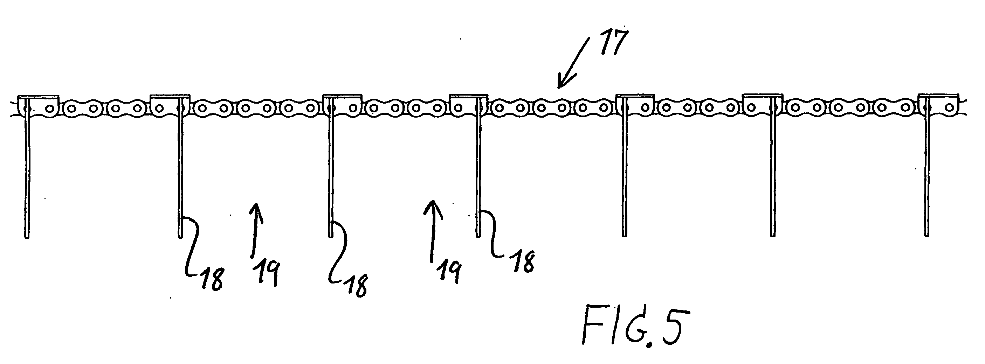

In continuation of the conveyor 2, the apparatus comprises a further transport device 13 which is shown in more detail in Figs. 3 -5.

The transport device 13 comprises a support frame 14 supporting the shafts 15 for sprocket wheels 16. The device 13 comprises a number of juxtaposed chains 17 of which only one is illustrated in the Figures. Preferably, there will be only two juxtaposed chains but a larger number is possible. Each set of sprocket wheels 16 supports a chain 17 on which there is disposed a row of carrier pins 18 serving as second stops. At interspaces 19 between succeeding carrier pins 18, the items 3 may be accommodated as appearing on Fig. 1.

By a stepwise advancing of the chain 17, the items 3 are thus displaced at the upper side of the forks 6. This is occurring until a desired number of juxtaposed items for a single layer 5 is provided. The stepwise advancing of the chain 17 occurs synchronously with actuation of the actuation units 10 so that the foremost item 3 on the conveyor 2, due to the action of the chain 11, is moved into contact with a foremost stop which is designated 18' on Fig. 1. Then a succeeding stop designated 18" on Fig. 1 will be brought into engagement with the back side of the item 3 by stepwise advancing of the chain, the item 3 then being situated in the interspace 19 at a position on the upper side 20 of the forks 6.

As appearing particularly on Fig. 1, the carrier pins 18 extend to a position below the surface 20 of the forks, so that all items, irrespectively how thick they are, are conveyed in a secure way by the engaging of the rear carrier 18" for an interspace 19.

When a layer 5 with a desired number of items 3 is formed on forks, these are retracted according to the arrow 21 by actuating an electric motor 22. The layer 5 is hereby placed as an uppermost layer in the stack 7. Then the stack is lowered in the direction of the arrow 23. Then the electric motor 22 is actuated again for moving the forks 6 back to the position shown in Fig. 1. Then stepwise advancing of the items 3 in the interspaces 19 is continued for the formation of a new layer.

As the items 3 are transferred to their position on the forks 6 by placing in each of the interspaces 19, a layer of items 3 having irregular side edges may be formed. Only it is to be ensured to choose a chain 17 where the carrier pin 18 has a sufficient mutual distance exceeding the width of the items 3 to be handled. It is thus possible to accommodate the items of the machine with different widths in a very simple way by changing the chains 17.

In Fig. 1 is illustrated that the supporting frame 13 also supports a joist layer 24. Thus it is possible to place joists with orientation transversely of the items 3 for achieving a stable stack.

## Claims

1. An apparatus for stacking elongate items (3) and comprising a conveyor (2) for receiving and conveying items oriented with their lengths transversely of their direction of movement, the items being supplied randomly, and with a row of first stops (8) for the items (3) which are brought into contact with the first stops (8) for forming a layer of adjacent items, and forks (6) for supporting and transporting the layer (5) of items in over a stack where the layer is to be placed, **characterised in that** a row of second stops (18) subsequent to the first stops (8) are in contact with the layer (5) of items (3) above the stack (7) when retracting the forks (6) so that the layer (5) is laid off upon previous layers in the stack (7), and that the conveyor (2) is provided with several rows of first stops (8) along its length which are arranged for being pivoted by rows between an active position, where they are retaining an item (3), and an inactive position, where the item (3) is released so that a foremost item (3) in the row of items on the conveyor (2) is transferred individually to an interspace between successive rows of second stops (18) which are disposed so as to be displaced in the direction of movement of the items above the forks (6), so that the items (3) are transferred from the conveyor (2) to the forks (6) by the displacement of the second stops (18) for forming of a layer (5) where each item is disposed in its interspace.

2. An apparatus according to claim 1, **characterised in that** the first and second stops (8,18) are of a height such that each item may comprise a single, or several overlaid items, as for example one or more boards.

3. An apparatus according to claim 1 or 2, **characterised in that** the conveyor is formed by a number of juxtaposed chains (17) and that the first stops are disposed between the chains on shafts mounted under the chains for being able to pivot the first stops from a position under the chains to a position over the chains for retaining an item.

4. An apparatus according to any preceding claim, **characterised in that** the second stops (18) are carrier pins which are mounted with fixed spacing on two chains running around chain wheels (16) on shafts (15) which are mounted above the stack so that the carrier pins extend down under the level of the upper side of the forks.

5. An apparatus according to claim 4, **characterised in that** the chain wheels (16) are displaced along the shafts.

6. An apparatus according to any preceding claim, **characterised in that** each row of the first stops (8) is connected with an individual actuation unit of which at least the last row as seen in the direction of movement is controlled synchronously with a stepwise advancing of the second stops (18) over the stack.

7. An apparatus according to any preceding claim, **characterised in that** each row of stops comprises 2 - 5, preferably 2 stops.

8. An apparatus according to any of claims 3 - 7, **characterised in that** the forks (6) are situated between the chains (17) of the conveyor for a reciprocating movement, as the forks may be retracted completely between the chains for laying off a layer formed on the forks, and where the items are retained in the interspaces between the second stops.

9. A method for stacking elongate items (3), comprising receiving and conveying items that are supplied in a random way with their lengths oriented transversely of their direction of movement, where the items are brought into contact with first stops (8) for forming a layer of adjacent items, where the items are stacked in layers (7) as a layer formed on supporting forks (6) are brought into contact with a row of second stops (18) above the stack at the retracting of the forks, so that the layer is laid off upon previous layers in the stack, **characterised in that** the items during the conveying may be retained individually as a conveyor (2) has plural rows of first stops (8) along its length which are arranged capable of being pivoted by rows between an active position where they are retaining an item, and an inactive position where the item is released so that a foremost item in the row of items on the conveyor is individually transferred to an interspace between successive rows of the second stops which are placed subsequent to the first stops and displaceable in the direction of movement of the items over the forks, so that the items are transferred from the conveyor (2) to the forks (6) by the displacement of the second stops (18) for forming a layer (5) where each item (3) is placed in its interspace.

10. A method according to claim 9, **characterised in that** at least the last row of the first stops (8) as seen in the direction of movement is controlled synchronously with a stepwise advancing of the second stops (18) above the stack, as each row of the first stops is connected with an individual actuating unit (22).

## Patentansprüche

1. Apparat zum Stapeln von länglichen Gegenständen (3), das einen Förderer (2) zur Empfangnahme und zum Förderen von Gegenständen umfaßt, deren Länge quer zu deren Bewegungsrichtung ausgerichtet ist, wobei die Gegenstände willkürlich zugeführt werden, und mit einer Reihe von ersten Anschlägen (8) für die Gegenstände(3), die in Kontakt mit den ersten Anschlägen (8) gebracht werden, um eine Schicht von angrenzenden Gegenständen zu bilden, und Gabeln (6) zur Unterstützung und Transport von der Schicht (5) von Gegenständen über einen Stapel, wo die Schicht anzubringen ist, **dadurch gekennzeichnet, daß** eine Reihe von zweiten Anschlägen (18) im Anschluß an die ersten Anschläge (8) mit der Schicht (5) von Gegenständen (3) über dem Stapel (7), wenn die Gabeln (6) zurückgezogen werden, in Kontakt ist, so daß die Schicht (5) auf den bisherigen Schichten im Stapel (7) abgelegt wird, und daß der Förderer (2) mit mehreren Reihen von ersten Anschlägen (8) entlang seiner Länge versehen ist, die dafür vorgesehen sind, in Reihen zwischen einer aktiven Position zu drehen, in der sie einen Gegenstand (3) zurückhalten, und einer inaktiven Position, wo der Gegenstand (3) freigelassen wird, so daß ein vorderster Gegenstand (3) in der Reihe von Gegenständen auf dem Förderer (2) individuel zu einem Zwischenraum zwischen auf einander folgenden Reihen von zweiten Anschlägen (18) überführt wird, die derartig angeordnet sind, in der Bewegungsrichtung der Gegenständen über den Gabeln (6) verschoben zu werden, so daß die Gegenstände (3) von dem Förderer (2) zu den Gabeln (6) mittels Verschiebung der zweiten Anschlägen (18) überführt werden, um eine Schicht (5) zu bilden, in der jeder Gegenstand in seinem Zwischenraum angeordnet ist.

2. Apparat nach Anspruch 1, **dadurch gekennzeichnet, daß** die ersten und zweiten Anschläge (8,18) von einer solchen Höhe sind, daß jeder Gegenstand einen einzelnen oder mehrere aufeinander liegenden Gegenstände, wie beispielsweise ein oder mehrere Bretter, umfassen kann.

3. Apparat nach Anspruch 1 oder 2, **dadurch gekennzeichnet, daß** der Förderer von einer Anzahl von nebeneinander gestellten Ketten (17) gebildet ist, und daß die ersten Anschläge zwischen den Ketten auf unter den Ketten angebrachten Schaften angeordnet sind, um die Drehung der ersten Anschläge von einer Position unter den Ketten zu einer Position über den Ketten zu ermöglichen, damit ein Gegenstand zurückgehalten werden kann.

4. Apparat nach jedem der vorstehenden Ansprüchen, **dadurch gekennzeichnet, daß** die zweiten Anschläge (18) Trägerzapfen sind, die mit festem Abstand auf zwei Ketten, die um Kettenräder (16) auf Schaften (15) laufen, angebracht sind, die über dem Stapel angebracht sind, so daß die Trägerzapfen sich nach unten unter der Ebene von der Oberseite der Gabeln erstrecken.

5. Apparat nach Anspruch 4, **dadurch gekennzeichnet, daß** die Kettenräder (16) entlang den Schaften versetzt sind.

6. Apparat nach jedem der vorstehenden Ansprüche, **dadurch gekennzeichnet, daß** jede Reihe der ersten Anschläge (8) mit einer individuellen Anregungseinheit verbunden ist, wobei mindestens die aus der Bewegungsrichtung gesehen letzte Reihe gleichzeitig mit einem Voranschreiten in Stufen der zweiten Anschläge (18) über den Stapel kontrolliert wird.

7. Apparat nach jedem der vorstehenden Ansprüche, **dadurch gekennzeichnet, daß** jede Reihe von Anschlägen 2-5, vorzugsweise 2, Anschlägen umfaßt.

8. Apparat nach jedem der Ansprüche 3-7, **dadurch gekennzeichnet, daß** die Gabeln (6) zwischen den Ketten (17) des Förderers zu einer gegenseitigen Bewegung angebracht sind, da die Gabeln zwischen den Ketten völlig zurückgezogen werden können, um eine Schicht abzulegen, die auf den Gabeln gebildet worden ist, und wo die Gegenständen in den Zwischenräumen zwischen den zweiten Anschlägen zurückgehalten werden.

9. Verfahren zum Stapeln von länglichen Gegenständen (3), das die Empfangnahme und Förderung von Gegenständen umfaßt, die auf einer willkürlichen Weise mit ihrer Länge quer zu ihrer Bewegungsrichtung zugeführt werden, wobei die Gegenstände in Kontakt mit ersten Anschlägen (8) gebracht werden, um eine Schicht von angrenzenden Gegenständen zu bilden, wobei die Gegenstände in Schichten (7) gestapelt werden, da eine Schicht, die auf unterstützenden Gabeln (6) gebildet worden ist, in Kontakt mit einer Reihe von zweiten Anschlägen (18) über dem Stapel beim Zurückziehen der Gabeln gebracht wird, so daß die Schicht auf bisherigen Schichten im Stapel aufgelegt wird, **dadurch gekennzeichnet, daß** die Gegenstände während der Förderung individuel zurückgehalten werden können, da ein Förderer (2) entlang seiner Länge mehrere Reihen von ersten Anschlägen ausweist, die derartig angebracht sind, daß sie imstande sind, in Reihen zwischen einer aktiven Position, in der sie einen Gegenstand zurückhalten, und einer inaktiven Position, wo der Gegenstand freigelassen wird, gedreht zu werden, so daß ein vorderster Gegenstand in der Reihe von Gegenständen auf dem Förderer individuel zu einem Zwischenraum zwischen auf einander folgenden Reihen von zweiten Anschlägen übertragen wird, die im Anschluß an den ersten Anschlägen angebracht sind und die in der Bewegungsrichtung der Gegenstände über den Gabeln verschoben werden, so daß die Gegenstände vom Förderer (2) zu den Gabeln (6) mittels Verschiebung der zweiten Anschläge (18) überführt werden, um eine Schicht (5) zu bilden, in der jeder Gegenstand (3) in seinem Zwischenraum angebracht wird.

10. Verfahren nach Anspruch 9, **dadurch gekennzeichnet, daß** mindestens die letzte Reihe von den ersten Anschlägen (8) aus der Bewegungsrichtung gesehen gleichzeitig mit einem Voranschreiten in Stufen der zweiten Anschläge (18) über den Stapel kontrolliert wird, da jede Reihe der ersten Anschlägen mit einer individuellen Anregungseinheit (22) verbunden ist.

## Revendications

1. Appareil pour empilement d'objets allongés (3) et comprenant un transporteur (2) pour recevoir et transporter des objets orientés avec leurs longueurs transversalement à leur direction de déplacement, les objets étant livrés au hasard, et avec une rangée de premières butées (8) pour les objets (3) qui sont mis en contact avec les premières butées (8) pour former une couche d'objets adjacents, et des fourches (6) pour supporter et transporter la couche (5) d'objets au-dessus d'une pile où la couche est à placer, **caractérisé en ce que**'une rangée de deuxièmes butées (18) subséquentes aux premières butées (8) sont en contact avec la couche (5) d'objets (3) au-dessus de la pile (7) lors de la rétraction des fourches (6) de sorte que la couche (5) est placée sur la couche précédente de la pile (7), et que le transporteur (2) est pourvu de plusieurs rangées de premières butées (8) au long de sa longueur, qui sont destinées à être pivotées par rangée entre une position active, où elles retiennent un objet (3), et une position inactive, où l'objet (3) est relâché de sorte qu'un objet de l'avant (3) de la rangée d'objets sur le transporteur (2) est transféré individuellement à un espace intermédiaire entre des rangées successives de deuxièmes butées (18) qui sont arrangées pour être déplacées dans la direction de mouvement des objets au-dessus des fourches (6), de sorte que les objets (3) sont transférés du transporteur (2) aux fourches (6) par le déplacement des deuxièmes butées (18) pour former une couche (5) dont chaque objet est disposé dans son espace intermédiaire.

2. Appareil selon la revendication 1, **caractérisé en ce que** les premières et les deuxièmes butées (8, 18) sont d'une telle hauteur que chaque objet peut comprendre un seul ou plusieurs objets superposés comme par example des planches.

3. Appareil selon la revendication 1 ou 2, **caractérisé en ce que** le transporteur est formé par un nombre de chaînes adjacentes (17) et que les premières butées sont disposées entre les chaînes sur des arbres montés au-dessous des chaînes pour être disposées à pivoter les premières butées d'une position au-dessous des chaînes à une position au-dessus des chaînes pour retenir un objet.

4. Appareil selon l'une quelconque des revendications précédentes, **caractérisé en ce que** les deuxièmes butées (18) sont des tenons d'entraînement qui sont montés avec une distance fixe sur deux chaînes tournant autour des roues à chaînes (16) sur des arbres (15) qui sont montés au-dessus de la pile de sorte que les tenons d'entraînement s'étendent au-dessous du niveau de la face supérieure des fourches.

5. Appareil selon la revendication 4, **caractérisé en ce que** les roues à chaînes (16) sont déplacées au long des arbres.

6. Appareil selon l'une quelconque des revendications précédentes, **caractérisé en ce que** chaque rangée des premières butées (8) est liée à une unité d'activation individuelle dont au moins la dernière rangée vue dans la direction de déplacement est contrôlée synchroniquement avec un avancement en cadence des deuxièmes butées (18) au-dessus de la pile.

7. Appareil selon l'une quelconque des revendications précédentes, **caractérisé en ce que** chaque rangée de butées comprend 2 à 5, de préférence 2 butées.

8. Appareil selon l'une quelconque des revendications 3-7, **caractérisé en ce que** les fourches (6) sont situées entre les chaînes (17) du transporteur pour un mouvement d'allée et de retour étant donné que les fourches peuvent être retenues complètement entre les chaînes pour déposer une couche formée sur les fourches, et où les objets sont retenus dans une espace intermédiaire entre les deuxièmes butées.

9. Procédé pour empilement d'objets allongés (3) comprenant la réception et le transport d'objets fournis d'une manière occasionnelle avec leurs longueurs orientées transversalement à leur direction de déplacement, où les objets sont mis en contact avec les premières butées (8) pour former une couche d'objets adjacents, où les objets sont empilés en couches (7) étant donné qu'une couche formée sur des fourches de support (6) est mise en contact avec une rangée de deuxièmes butées (18) au-dessus de la pile lors de la rétraction des fourches de sorte que la couche est déposée sur des couches précédentes dans la pile, **caractérisé en ce que** les objets lors du transport peuvent être retenus individuellement étant donné qu'un transporteur (2) possède plusieurs rangées de premières butées (8) au long de sa longueur, qui sont disposées à être pivotées par rangée entre une position active où elles retiennent un objet, et une position inactive où l'objet est relâché de sorte qu'un objet de l'avant de la rangée d'objets sur le transporteur est transféré individuellement à un espace intermédiaire entre des rangées successives de deuxièmes butées qui sont arrangées subséquemment aux premières butées et déplaçables dans la direction de mouvement des objets au-dessus des fourches, de sorte que les objets sont transférés du transporteur (2) aux fourches (6) par le déplacement des deuxièmes butées (18) pour former une couche (5) dont chaque objet (3) est disposé dans son espace intermédiaire.

10. Procédé selon la revendication 9, **caractérisé en ce qu'**au moins la dernière rangée des première butées (8) vue dans la direction de mouvement est contrôlée synchroniquement avec un avancement en cadence des deuxièmes butées (18) au-dessus de la pile comme chaque rangée des premières butées est liée à une unité d'activation (22) individuelle.
